# EUROPÄISCHE PATENTSCHRIFT

(11) **EP 0 451 479 B1**
(45) Veröffentlichungstag und Bekanntmachung des Hinweises auf die Patenterteilung: **02.05.1997**
(21) Anmeldenummer: 91102911.4
(22) Anmeldetag: 28.02.1991
(51) Int. Cl.: B23Q 3/06, B23Q 3/16

(54) **Bearbeitungszentrum für ebene, plattenförmige Werkstücke**
Machining centre for flat, platelike workpieces
Centre d'usinage pour pièces d'oeuvre en plaques pleines

(30) Priorität: 12.04.1990 DE 4011895
(43) Veröffentlichungstag der Anmeldung: 16.10.1991
(73) Patentinhaber: HANS HEID AG HOLZBEARBEITUNGS-MASCHINEN, CH-4456 Tenniken (CH)
(72) Erfinder: Mayer, Kurt, W-7852 Binzen (DE)
(74) Vertreter: Allgeier, Kurt

(56) Entgegenhaltungen:
- DE-A- 3 619 575
- DE-U- 7 329 427
- US-A- 4 485 857

## Beschreibung

Die Erfindung bezieht sich auf ein Bearbeitungszentrum für ebene, plattenförmige Werkstücke nach dem Oberbegriff des Anspruchs 1. Diese können aus Holz, Spannplatten-Werkstoff, Kunststoff, Metall oder anderen spanabhebend bearbeitbaren Werkstoffen bestehen. Zur spanabhebenden Bearbeitung in dem Bearbeitungszentrum werden die Platten in einer Arbeitsebene festgespannt, wobei die Arbeitsebene horizontal oder auch vertikal angeordnet sein kann.

Derartige Bearbeitungszentren sind bekannt, beispielsweise aus dem Firmenprospekt "IMA-Notre" Maschinenfabriken Klessmann GmbH & Co., D-4830 Gütersloh, betreffend "CNC Bearbeitungszentrum für Komplettbearbeitung - Bima Typ BIAM 100" (März 1990). Diese sind in der Regel mit Bohr- und Fräswerkzeugen ausgerüstet, die in der Parallelebene der plattenförmigen Werkstücke in der x- und y-Achse in CNC-programmsteuerbaren Bahnkurven verfahrbar, an beweglichen, mittels mechanischer Stellantriebe verstellbaren, Werkzeugträgern angeordnet und durch einen mechanisch angetriebenen oder betätigbaren Eintauch-Hub in Richtung der z-Achse in die Arbeitsstellung am Werkstück bewegbar sind. Die Ansteuerung der Werkzeug- und Werkzeugträgerbewegungen wird von einem CNC-Programm bewirkt. Die Erfindung bezieht sich ferner auch auf Bearbeitungszentren, insbesondere für plattenförmige Werkstücke aus Holz, die mit Vorrichtungen zur selbstätigen Zuführung, Positionierung, Bestückung und Befestigung von Beschlägen, Scharnieren oder dgl. Zusatzteilen ausgerüstet sind, und bei denen die Werkstückplatten vor der Bearbeitung positioniert und festgespannt werden müssen.

Um die plattenförmigen Werkstücke zu positionieren und in der Arbeitsebene festzuspannen sind Anschlag- und Festspannmittel vorgesehen, die aus in der Arbeitsebene in der x- und y-Achse beliebig verschiebbaren, in den Funktionsstellungen durch Haft- oder Festspannmittel fixierbaren Anschlagklötzen, sowie in der Arbeitsebene in der x- und y-Achse beliebig verschiebbaren, in den Funktionsstellungen durch Haft- oder Festspannmittel fixierbaren Werkstück-Spannvorrichtungen bestehen.

Diese Anschlagklötze und auch die Werkstück-Spannvorrichtungen müssen bei Beginn des Bearbeitungs-Durchlaufs und bei jeder Änderung des Bearbeitungsprogramms für ein anderes Werkstück von Hand in ihre Funktionsstellung gebracht und dort fixiert werden, wobei das Werkstück genau innerhalb des Koordinatensystems auf den jeweiligen Anfangspunkt der Bearbeitungsfolge ausgerichtet werden muß.

Dieses Einrichten der Positionierung des Werkstückes für jede neue Bearbeitungsfolge ist sehr zeitaufwendig (bis zu 20 Minuten), und es dauert jedenfalls oft wesentlich länger als eine Anzahl von Bearbeitungsdurchgängen, die jeweils nur Sekunden beanspruchen.

Aus diesen Gegebenheiten leitet sich die Aufgabe der Erfindung dahingehend ab, eine Ausbildungsweise und eine Arbeitsweise des Bearbeitungszentrums zu schaffen, durch welche es möglich ist, die Anschlagklötze und die Werkstück-Spannvorrichtungen nach einem vorher festgelegten Folge-Steuerprogramm selbsttätig und ohne die Notwendigkeit manueller Operationen in ihre Funktionsstellungen zu verbringen und dort zu fixieren.

Diese Aufgabe wird gelöst durch eine mittels eines zusätzlichen Steuerprogramms betätigbare Verschiebbarkeit der Anschlagklötze und der Werkstück-Spannvorrichtungen aus ihren Warte-Positionen oder ihren bisher eingenommenen Positionen in ihre nach dem zusätzlichen Steuerprogramm vorgewählten neuen Funktionstellungen durch Beeinflussung der Stellantriebe von in der Arbeitsebene beliebig verfahrbaren Positioniervorrichtungen, und wenigstens einer wenigstens ein Mitnahmeorgan aufweisende Positioniervorrichtung, wobei das Mitnahmeorgan am Werkzeugträgerschlitten oder -arm angebracht ist, sowie durch die zum formschlüssigen Eingriff des Mitnahmeorgans ausgebildeten Anschlagklötze und Werkstück-Spannvorrichtungen.

Dabei ist vorteilhafterweise vorgesehen, daß das Mitnahmeorgan aus einer Ruhestellung in eine Operativ-Stellung zum formschlüssigen Eingriff in einen Anschlagklotz oder eine Werkstück-Spannvorrichtung versetzbar ist.

Beim Positionieren der Anschlagklötze und der Werkstück-Spannvorrichtungen für ein nachfolgend aufzuspannendes Werkstück für den nächstfolgenden Bearbeitungsdurchlauf muß darauf geachtet werden, daß die Bahnkurven der Werkzeuge die Anschlagklötze und die Werkstück-Spannvorrichtungen nicht tangieren und dadurch Beschädigungen oder Zerstörungen derselben wie auch der Werkzeuge vermieden werden. Um solche Kollisionen auszuschließen, ist eine Übertragbarkeit weiterer Steuerbefehle aus dem sowohl die Werkzeugschlitten- und Werkzeugträger-Operationen für die zu umfahrenden Außen- und Innenkonturen wie auch die sonstigen Bohr- und Fräs-Operationen als Steuerbefehle enthaltenden Steuerprogramm in das zusätzliche Steuerprogramm für die Positionierung der Anschlagklötze und der Werkstück-Spannvorrichtungen vorgesehen, durch welche vorgewählte Sicherheits-Abstandszonen von den von den Bearbeitungswerkzeugen für das Bohren, Fräsen und dgl. Operationen zu befahrenden Bahnkurven einprogrammierbar sind, innerhalb welcher die in neue Funktionsstellungen zu verfahrenden Anschlagklötze und Werkstück-Spannvorrichtungen nicht positionierbar sind.

Eine besonders vorteilhafte weitere Lösung besteht darin, daß die Positioniervorrichtung ein Werkzeugsträgerschlitten oder ein Werkzeugträgerarm sein kann. Dadurch werden besondere Positioniervorrichtungen gespart, da die Werkzeugschlitten oder Werkzeugträger diese Aufgabe mit ausführen können. Hierzu ist es lediglich erforderlich, daß das Mitnahmeorgan an einer Werkzeugwechselvorrichtung des Werkzeugträgerschlittens oder Werkzeugträgerarms angebracht ist. Dabei kann die Werkzeugwechselvorrichtung ein Revolverkopf sein.

Nach weiteren Erfindungsmerkmalen ist vorgesehen, daß das Mitnahmeorgan wenigstens einen Stift oder einen Bolzen aufweist, und ferner, daß die Anschlagklötze und die Werkstück-Spannvorrichtungen mit Erhöhungen oder Vertiefungen zum Eingriff des Mitnahmeorgans versehen sind.

Durch die erfindungsgemäße Ausbildung des Bearbeitungszentrums wird es ermöglicht, in wenigen Sekunden die Anschlagklötze für die Werkstückplatten und die Werkstück-Spannvorrichtungen aus ihren jeweiligen bisherigen IST-Positionen in ihre neuen SOLL-Positionen, d. h. Funktionsstellungen für die jeweils nächsten Bearbeitungsdurchläufe einer neuen Serie von zu bearbeitenden Werkstücken zu versetzen. Dabei können die bisherigen IST-Positionen Warte-Positionen an den Rändern der Arbeitsebene sein, oder es sind diejenigen Positionen, welche die Anschlagklötze und die Aufspann-Vorrichtungen zuletzt beim vorangegangenen Bearbeitsablauf eingenommen haben.

Mittels der Mitnahmeorgane werden die Anschlagklötze und die Werkstück-Spannvorrichtungen in Sekundenschnelle nacheinander aus ihren IST-Positionen in ihre SOLL-Positionen, d. h. ihre Funktionsstellungen auf der Arbeitsebene bzw. Aufspannebene verschoben, und es müssen Vorkehrungen getroffen werden, daß sie nicht ungewollt, z. B. durch Maschinen-Vibrationen oder andere Einflüsse von dieser vorbestimmten Stellung abweichen. Da derartige Bearbeitungszentren auf äußerst hohe Genauigkeitsanforderungen ausgelegt sind, können auch geringste Abweichungen von den vorgegebenen Positionen nicht zugelassen werden. Daher wird nach der weiteren Erfindung vorgeschlagen, daß zum Zuführen und zumindest bis zum endgültigen Festspannen des Werkstücks an den Anschlagklötzen und Werkstück-Spannvorrichtungen Haftmittel vorgesehen sind, die in bevorzugter Ausbildung an der die Arbeitsebene bildenden Aufspannebene zugewandten Unterseite der Anschlagklötze und Werkstück-Spannvorrichtungen angeordnet sind. Vorzugsweise ist vorgesehen, daß die Anschlagklötze und die Werkstück-Spannvorrichtungen mit auf ihrer der die Arbeitsebene bildenden Aufspannebene zugewandten Unterseite wirkenden Haftmagneten versehen sind, wobei die Haftmagnete Permanentmagnete sein können.

Zusätzlich oder in Abänderung der oben beschriebenen Ausbildungsweise können die Anschlagklötze auf ihrer zu der die Arbeitsebene bildenden Aufspannebene zugewandten Unterseite mit Vakuum-Saugköpfen ausgerüstet sein.

Diese Vakuum-Saugköpfe können derart an Steuervorrichtungen und Vakuumpumpen angeschlossen sein, daß sie während des Verschiebens an zu ihrer Funktionsstellung mit nur geringem Vakuum beaufschlagbar sind und daher eine für das Fixieren in ihrer jeweiligen Stellung ausreichende Haftkraft ausüben. Durch Umschalten können die Saugköpfe mit dem vollen Vakuum beaufschlagbar sein und daher während der Dauer des Abarbeitens einer Bearbeitungsfolge die betriebsnotwendige Haftkraft ausüben.

Nach weiteren Merkmalen der Erfindungs sind die Werkstück-Spannvorrichtungen auf ihrer zu der die Arbeitsebene bildenden Aufspannebene zugewandten Unterseite und an ihrer Oberseite mit Vakuum-Saugköpfen ausgerüstet. Auch hier können die an der Unterseite angeordneten Saugköpfe derart mittels entsprechenden Steuervorrichtungen vakuumbeaufschlagbar sein, daß eine für das Fixieren ausreichende geringere Haftkraft ausübbar ist, während durch Umschalten für die Bearbeitungsdauer die volle Haftkraft zur Verfügung steht.

In Abwandlung der Ausbildung der Werkstück-Spannvorrichtungen ist es im Rahmen der Erfindung auch möglich, die Ober- und Unterseite entweder mit Vakuum-Saugköpfen oder mit Permanent- bzw. Elektro-Haftmagneten auszurüsten. Ferner können die Vakuum-Saugköpfe und Haftmagnete an der Oberseite der Werkstück-Spannvorrichtungen auf durch bekannte mechanische Klemm-Spannvorrichtungen ersetzt werden, die ebenfalls ferngesteuert betätigbar sein können.

Weitere Besonderheiten und Merkmale der Erfindung sind der Beschreibung der in der Zeichnung dargestellten Ausführungsbeispiele zu entnehmen.

Es zeigen
- Fig. 1: einen perspektivische Ansicht der horizontalen Aufspannebene eines Bearbeitungszentrums nach der Erfindung;
- Fig. 2: eine Teil-Vorderansicht gem. Fig. 1;
- Fig. 3: eine schematische Darstellung der Vorderansicht eines Bearbeitungszentrums nach der Erfindung;
- Fig. 4: eine schematische Darstellung der Stirnansicht eines Bearbeitungszentrums nach der Erfindung;
- Fig. 5: einen Teilschnitt durch einen Anschlagklotz;
- Fig. 6: einen Teilschnitt durch eine Werkstück-Spannvorrichtung;
- Fig. 7: eine schematische Draufsicht auf die Aufspannebene eines Bearbeitungszentrums nach der Erfindung.

In den Zeichnungsdarstellungen ist das Maschinenbett des Bearbeitungszentrums mit 1 und die darauf angeordnete Aufspannebene mit 2 bezeichnet. Das beispielsweise dargestellte plattenförmige Werkstück 3 weist Außenkonturen 4 und Innenkonturen 5 auf, welch' letztere jeweils einen Ausschnitt aus der Werkstückplatte 3 darstellen.

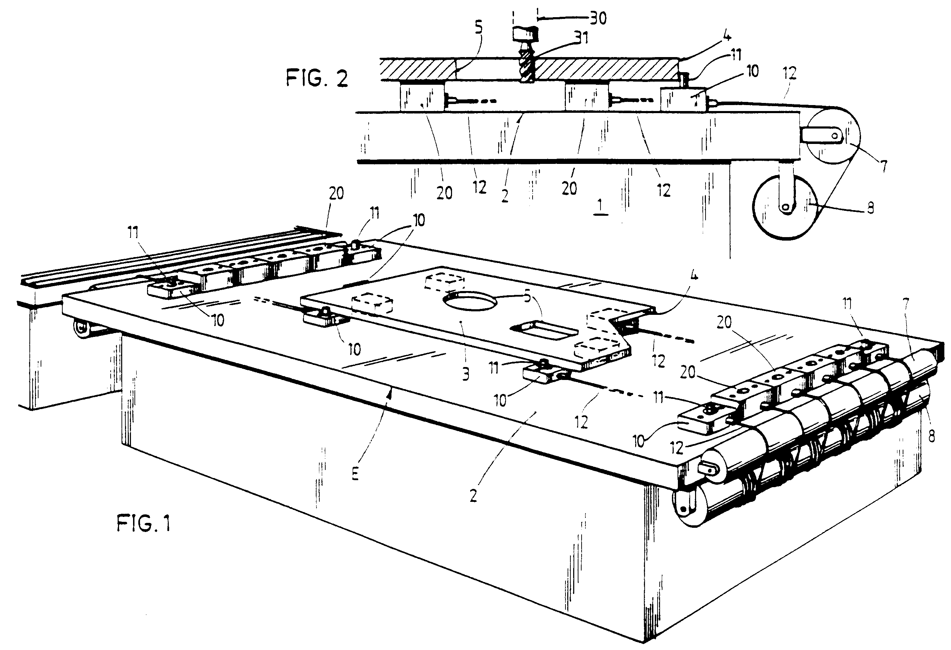

Wie aus Fig. 1 ferner ersichtlich ist, befinden sich sowohl Anschlagköpfe 10 wie Werkstück-Spannvorrichtungen 20 an beiden Enden der Aufspannebene 2 in Wartepositionen in Bereitschaft, jederzeit beim Wechsel der Werkstückplatte 3 eingesetzt zu werden.

Die Werkstückplatte 3 ist auf den Anschlagklötzen 10 und den - in Fig. 1 strichpunktiert angedeuteten - Werkstück-Spannvorrichtungen 20 gelagert, wie auch aus Fig. 2 ersichtlich ist.

Dabei sind im Ausführungsbeispiel die Anschlagklötze 10 mit versenkbaren Anschlagstiften 11 ausgestattet, gegen welche die Werkstückplatte 3 angelegt wird.

Die Werkstück-Spannvorrichtungen 20 können in den Ausführungsbeispielen gem. Fig. 1 bis 4 mit Vakuum-Saugköpfen oder mit Haftmagneten, insbesondere Elektromagneten ausgerüstet sein. Die Zuleitungen zur Energieversorgung dieser Haftmittel sind mit 12 bezeichnet und zu den beiden Enden der Aufspannebene 2 geführt, wo sie über Zuleitungs-Umlenkrollen 7 zu den Zuleitungs-Haspeln 8 geführt und von dort in nicht dargestellter Weise über Steuervorrichtungen mit der jeweiligen Energie-Speisevorrichtung verbunden sind.

In Fig. 2 ist noch ein Bearbeitungswerkzeug (Fräser) 31 erkennbar, der in einer Pinole 30 befestigt ist.

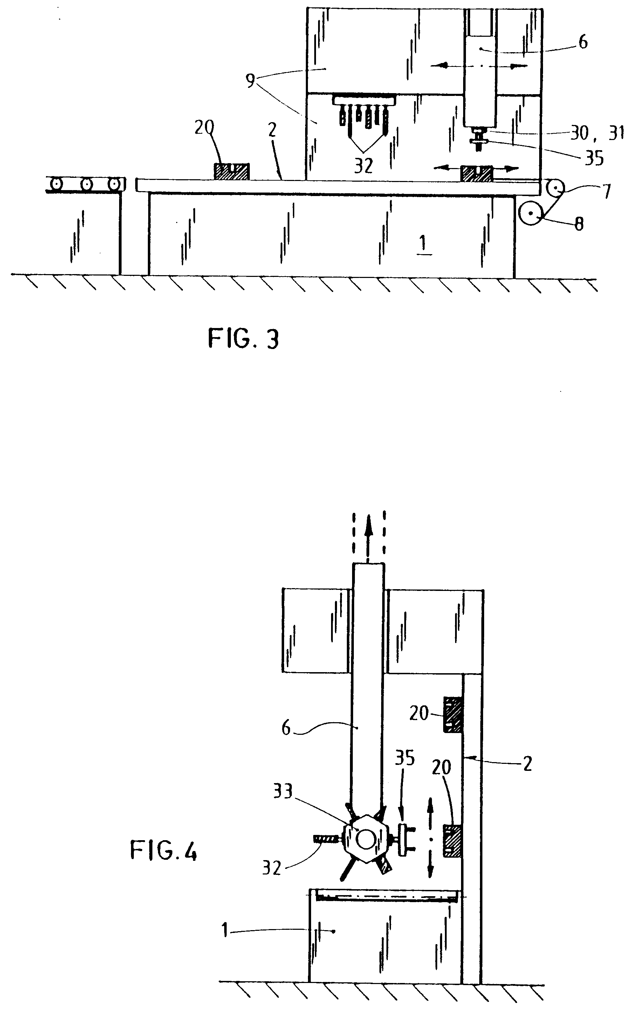

In der Darstellung gem. Fig. 3 ist erkennbar, daß anstelle des in der Pinole 30 eingespannten Werkzeugs 31 dort ein Mitnahmeorgan 35 angebracht ist, welches einen Mitnahmestift aufweist, der in eine Vertiefung der Werkstück-Spannvorrichtung 20 eingreifen und diese auf der Aufspannebene 2 verschieben kann.

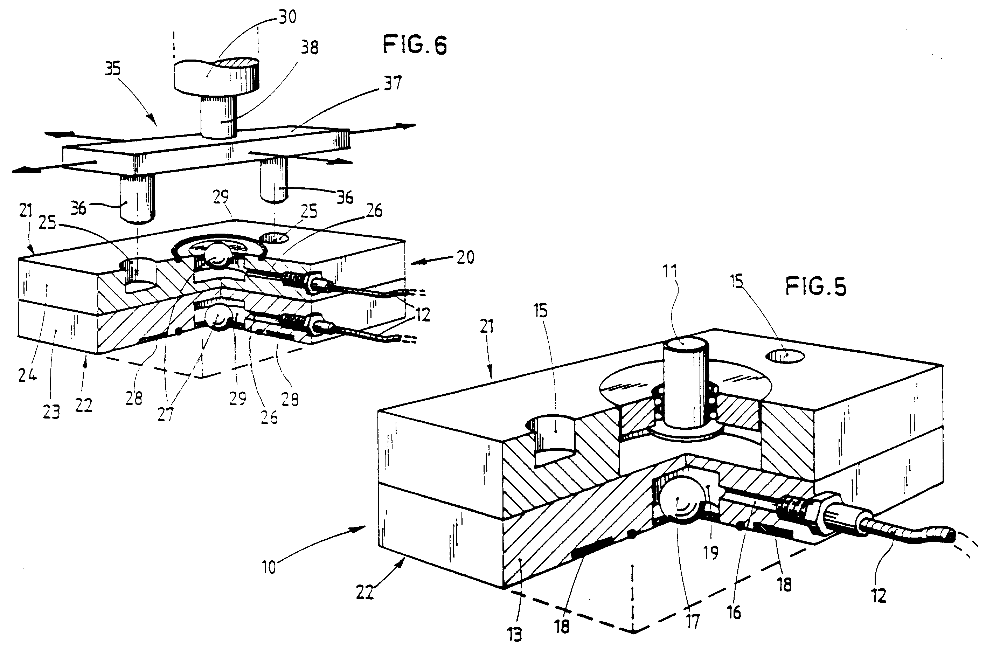

Eine andere Ausführung zeigt Fig. 4, bei welcher die Aufspannebene 2 des Bearbeitungszentrums vertikal angeordnet ist. Die Werkstück-Spannvorrichtungen 20 sind erkennbar mit Vertiefungen 25 - siehe Fig. 6 - versehen, in welche die Mitnahmebolzen 36 des Mitnahmeorgans 35 eingreifen und die Werkstück-Spannvorrichtungen 20 in der Vertikalebene verschieben können, in welcher sie durch Haftmittel - z. B. Haftmagnete - gehalten sind. In diesem Ausführungsbeispiel ist der Werkzeugträger 6 mit einem Revolverkopf 33 ausgerüstet, der verschiedene Bearbeitungswerkzeuge 32 trägt, und der ferner mit dem Mitnahmeorgan 35 versehen ist, welches bei jeder Änderung der Positionierung der Anschlagklötze 10 und/oder der Werkstück-Spannvorrichtungen 20 zum Einsatz gebracht werden kann.

Wie aus den Fig. 5 und 6 hervorgeht, weisen der Anschlagklotz 10 und die Werkstück-Spannvorrichtung 20 einen ähnlichen Aufbau auf. Sie sind im Ausführungsbeispiel aus einem Unterteil 13, 23 und einem Oberteil 14, 24 zusammengebaut, wobei die Unterteile 13 und 23 übereinstimmend ausgebildet sein können. Der Anschlagklotz 10 ist an seinem Oberteil 14 mit den Vertiefungen 15 versehen, in welche die Mitnahmebolzen 36 des Mitnahmeorgans 35 - siehe Fig. 6 - eingreifen können. Ferner ist das Oberteil 14 mit dem versenkbaren Anschlagstift 11 ausgerüstet. Das Unterteil 13 ist an seiner Unterseite 22 mit dem Permanent-Haftmagneten 18 versehen. Der Vakuum-Saugkopf 19 ist durch das Vakuum-Ventil 17 verschließbar, welches als Kugel ausgebildet ist. Von der Vakuum-Zuleitungsbohrung 16 für die Vakuumleitung 12 zu der nicht dargestellten Steuervorrichtung und der Vakuumpumpe.

In ähnlicher Weise ist auch eine Werkstück-Spannvorrichtung 20 aufgebaut wie aus Fig. 6 ersichtlich ist. Auch hier ist das Unterteil 23 mit den Haftmagneten 28 und mit dem Vakuum-Saugkopf 29, dem Vakuum-Ventil 27, der Zuleitungsbohrung 26 und der Zuleitung 12 ausgestattet. Dieselbe Vakuum-Einrichtung ist auch im Oberteil 24 vorgesehen. Außerdem enthält das Oberteil 24 auf der Oberseite 21 zwei Vertiefungen 25, in welche die Mitnahmebolzen 36 des Mitnahmeorgans 35 eingreifen können.

Das Mitnahmeorgan 35 ist mittels des Mitnahme-Kopfes 38 in einer Pinole 30 befestigt. An der Mitnahmeplatte 37 sind die beiden Mitnahmebolzen 36 angeordnet.

Die Ausbildungsweise der Anschlagklötze 10 und der Werkstück-Spannvorrichtungen 20 sowie des Mitnahmeorgans 35 kann abweichend von der Darstellung in den Fig. 5 und 6 auch beliebig anders getroffen sein, beispielsweise mit kreisrundem oder ovalem Grundriß, oder mit einem anderen Anschlagstift oder anderen Mitnahmebolzen, ohne den Bereich der Erfindung zu verlassen.

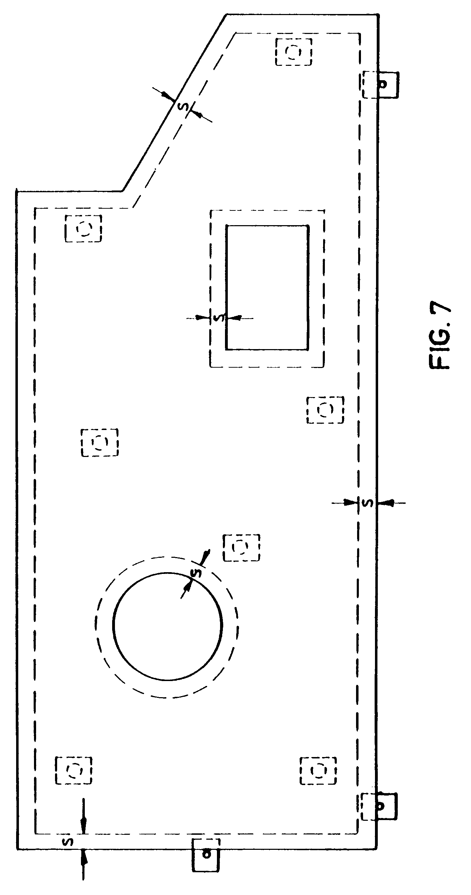

In der Draufsicht gem. Fig. 7 ist erkennbar, daß die Werkstück-Platte 3 an den Anschlagklötzen 10 anliegt und mittels der gestrichelt angedeuteten (darunterliegenden) Werkstück-Spannvorrichtungen 20 auf der nicht näher dargestellten Aufspannebene festgehalten ist. Mit "s" ist die Sicherheitszone bezeichnet, innerhalb welcher Werkstück-Spannvorrichtungen 20 nicht positioniert werden können.

### BEZUGS-ZEICHEN-LISTE

- 1: Maschinenbett
- 2: Aufspannebene
- 3: Werkstückplatte
- 4: Außenkonturen
- 5: Innenkonturen
- 6: Werkzeugträgerschlitten
- 7: Zuleitungs-Umlenkrolle
- 8: Zuleitungs-Haspelrolle
- 9: Werkzeugträgerarm
- 10: Anschlagklotz
- 11: versenkb. Anschlagstift
- 12: Zuleitungen
- 13: Anschlagklotz-Unterteil
- 14: Anschlagklotz-Oberteil
- 15: Vertiefungen bei 10
- 16: Zuleitungsbohrung bei 10
- 17: Vakuum-Ventil
- 18: Haftmagnet zu 10
- 19: Vakuum-Saugkopf zu 10
- 20: Werkstück-Spannvorricht.
- 21: Oberseite
- 22: Unterseite
- 23: Spannvorricht.-Unterteil
- 24: Spannvorricht.-Oberteil
- 25: Vertiefungen bei 20
- 26: Zuleitungsbohrung bei 20
- 27: Vakuum-Saugkopf zu 20
- 28: Haftmagnet zu 20
- 29: Vakuum-Saugkopf zu 20
- 30: Pinole
- 31: Werkzeugwechselvorricht.
- 32: Bearbeitungswerkzeuge
- 33: Revolverkopf
- 34:
- 35: Mitnahmeorgan
- 36: Mitnahme-Bolzen
- 37: Mitnahmeplatte
- 38: Mitnahme-Kopf
- E: Arbeitsebene
- s: Sicherheitszone

## Patentansprüche

1. Bearbeitungszentrum für ebene, plattenförmige Werkstücke, die in einer Arbeitsebene (E) festspannbar und nach einem vorgewählten Steuerprogrammablauf spanabhebend bearbeitbar sind, mit
A.0 Bohr- und Fräswerkzeugen,
A.1 die in der Parallelebene der plattenförmigen Werkstücke (3) in der x- und y-Achse in CNC-programmsteuerbaren Bahnkurven verfahrbar,
A.2 an beweglichen, mittels mechanischer Stellantriebe im Bereich der Arbeitsebene (E) in der x- und y-Achse verfahrbaren Werkzeugträgerschlitten (6) oder Werkzeugträgerarmen (9) angeordnet und
A.3 durch einen mechanisch angetriebenen oder betatigbaren Eintauch-Hub in Richtung der z-Achse in die Arbeitsstellung am Werkstück bewegbar sind,
B.0 Anschlag- und Festspannmitteln für die Werkstücke in der Arbeitsebene, bestehend aus
B.1 in der Arbeitsebene (E) in der x- und y-Achse beliebig verschiebbaren, in den Funktionsstellungen durch Haft- oder Festspannmittel fixierbaren Anschlagklötzen (10), sowie
B.2 in der Arbeitsebene (E) in der x- und y-Achse beliebig verschiebbaren, in den Funktionsstellungen durch Haft- oder Festspannmittel fixierbaren Werkstück-Spannvorrichtungen (20),
gekennzeichnet dadurch, daß
C.O wenigstens eine wenigstens ein Mitnahmeorgan (35, 36) aufweisende in der Arbeitsebene (E) beliebig verfahrbare Positioniervorrichtung vorgesehen ist, wobei das Mitnahmeorgan (35, 36) am Werkzeugträgerschlitten oder -arm (6, 9) angebracht ist,
C.1 die Anschlagklötze (10) und Werkstück-Spannvorrichtungen (20) zum formschlüssigen Eingriff des Mitnahmeorgans (35, 36) ausgebildet sind, wobei
C.2 die Anschlagklötze (10) und Werkstück-Spannvorrichtungen (20) mittels eines zusätzlichen Steuerprogramms aus ihren Warte-Positionen oder ihren bisher eingenommenen Positionen in ihre nach dem zusätzlichen Steuerprogramm vorgewählten neuen Funktionsstellungen durch Beeinflussung der Stellantriebe des Werkzeugträgerschlittens oder -arms (6, 9) verschiebbar sind.

2. Bearbeitungszentrum nach Anspruch 1, gekennzeichnet durch Übertragung weiterer Steuerbefehle aus dem sowohl die Werkzeugschlitten- und Werkzeugträger-Operationen für die zu umfahrenden Außen- und Innenkonturen wie auch die sonstigen Bohr- und Fräs-Operationen als Steuerbefehle enthaltenden Steuerprogramm in das zusätzliche Steuerprogramm für die Positionierung der Anschlagklötze und der Werkstück-Spannvorrichtungen, durch welche vorgewählte Sicherheits-Abstandszonen von den von den Bearbeitungswerkzeugen für das Bohren, Fräsen und dgl. Operationen zu befahrenden Bahnkurven einprogrammierbar sind, innerhalb weicher die in neue Funktionsstellungen zu verfahrenden Anschlagklötze (10) und Werkstück-Spannvorrichtungen (20) nicht positionierbar sind.

3. Bearbeitungszentrum nach Anspruch 1, dadurch gekennzeichnet, daß das Mitnahmeorgan (35) aus einer Ruhestellung in eine Operativ-Stellung zum formschlüssigen Eingriff in einen Anschlagklotz (10) oder eine Werkstück-Spannvorrichtung (20) versetzbar ist.

4. Bearbeitungszentrum nach Anspruch 1, dadurch gekennzeichnet, daß die Positioniervorrichtung ein Werkzeugträgerschlitten (6) oder ein Werkzeugträgerarm (9) ist.

5. Bearbeitungszentrum nach Anspruch 1, dadurch gekennzeichnet, daß das Mitnahmeorgan (35) an einer Werkzeugwechselvorrichtung (30, 31, 33) des Werkzeugträgerschlittens (6) oder Werkzeugträgerarms (9) angebracht ist.

6. Bearbeitungszentrum nach Anspruch 5, dadurch gekennzeichnet, daß die Werkzeugwechselvorrichtung (30) ein Revolverkopf (33) ist.

7. Bearbeitungszentrum nach Anspruch 3, dadurch gekennzeichnet, daß das Mitnahmeorgan (35) wenigstens einen Stift oder einen Bolzen (36) aufweist.

8. Bearbeitungszentrum nach Anspruch 1, dadurch gekennzeichnet, daß die Anschlagklötze (10) und die Werkstück-Spannvorrichtungen (20) mit Erhöhungen oder Vertiefungen (15, 25) zum Eingriff des Mitnahmeorgans (35) versehen sind.

9. Bearbeitungszentrum nach Anspruch 1, dadurch gekennzeichnet, daß die Anschlagklötze (10) und die Werkstück-Spannvorrichtungen (20) mit auf ihrer der die Arbeitsebene (E) bildenden Aufspannebene (2) zugewandten Unterseite wirkenden Haftmagneten (18, 28) versehen sind.

10. Bearbeitungszentrum nach Anspruch 9, dadurch gekennzeichnet, daß die Haftmagnete (18, 28) Permanentmagnete sind.

11. Bearbeitungszentrum nach Anspruch 1, dadurch gekennzeichnet, daß die Anschlagklötze (10) auf ihrer zu der die Arbeitsebene (E) bildenden Aufspannebene (2) zugewandten Unterseite mit Vakuum-Saugköpfen (17, 19) ausgerüstet sind.

12. Bearbeitungszentrum nach Anspruch 1, dadurch gekennzeichnet, daß die Werkstück-Spannvorrichtungen (20) auf ihrer zu der die Arbeitsebene (E) bildenden Aufspannebene (2) zugewandten Unterseite (22) und an ihrer Oberseite mit Vakuum-Saugköpfen (27, 29) ausgerüstet ist.

13. Bearbeitungszentrum nach Anspruch 1, dadurch gekennzeichnet, daß die Werkstück-Spannvorrichtungen (20) auf ihrer zu der die Arbeitsebene (E) bildenden Aufspannebene (2) gewandten Unterseite (22) mit Vakuum-Saugköpfen (27, 29) und auf ihrer Oberseite mit permanent- oder Elektro-Haftmagneten ausgerüstet sind.

14. Bearbeitungszentrum nach Anspruch 1, dadurch gekennzeichnet, daß die Werkstück-Spannvorrichtungen (20) auf ihrer zu der die Arbeitsebene (E) bildenden Aufspannebene (2) gewandten Unterseite (22) mit Vakuum-Saugköpfen (27, 29) und auf ihrer Oberseite mit mechanischen Klemm-Spannvorrichtungen ausgerüstet sind.

## Claims

1. Machining centre for flat, platelike workpieces which can be fixed by clamping in a work plane (E) and machined according to a preselected control program sequence, provided with
A.0 drilling and milling tools,
A.1 which travel within the parallel plane of the platelike workpieces (3), viz. in the x- and y-axis and in path bends controllable by CNC program,
A.2 which have been arranged at movable tool carriages (6) or tool brackets (9) travelling by means of mechanical actuators within the reach of the work plane (E) and in the x- and y-axis, and
A.3 which are movable to the working position at the workpiece by a mechanically driven or operable dip travel towards the z-axis, further with
B.0 stop and clamping elements for the workpieces in the work plane, comprising
B.1 stoppers (10) fixable in the functioning positions by adhesive means or clamping elements and discretionally shiftable within the work plane (E) and in the x- and y-axis, as well as
B.2 workpiece clamping devices (20) fixable in the functioning positions by adhesive means or clamping elements and discretionally shiftable within the work plane (E) in the x- and y-axis,
characterized in that
C.0 at least a single positioning device has been provided showing at least one driving element (35, 36) and being discretionally movable within the work plane (E), and said driving element (35, 36) being fitted to the tool carriage or tool bracket (6, 9),
C.1 the stoppers (10) and the tool clamping devices (20) have been designed for a positive action of the driving element (35, 36), and here
C.2 the stoppers (10) and the tool clamping devices (20) are shiftable by means of an additional control program from their waiting positions or actual positions to their new functioning positions preselected according to the additional control program by affecting the actuators of the tool carriage or tool bracket (6, 9).

2. Machining centre according to claim 1, characterized by the transfer of control instructions from the control program containing both the tool carriage and bracket operations for the outside and inside contours to be followed and the other drilling and milling operations as control instructions into the additional control program for positioning the stoppers and the workpiece clamping devices, and these instructions allow to program preselected safety areas starting from the path bends to be turned by the machining tools for drilling, milling and similar operations, and within such safety areas it is not possible to position any stoppers (10) nor workpiece clamping devices (20) to be moved to new functioning positions.

3. Machining centre according to claim 1, characterized in that the driving element (35) can be displaced from an idle position to an operative position for the positive mesh into a stopper (10) or a workpiece clamping device (20).

4. Machining centre according to claim 1, characterized in that a tool carriage (6) or a tool bracket (9) will function as a positioning device.

5. Machining centre according to claim 1, characterized in that the driving element (35) has been fitted to a tool changer (30, 31, 33) of the tool carriage (6) or tool bracket (9).

6. Machining centre according to claim 5, characterized in that the tool changer (30) has been designed as a turret (33).

7. Machining centre according to claim 3, characterized in that the driving element (35) shows at least one pin or one stud (36).

8. Machining centre according to claim 1, characterized in that the stoppers (10) and the workpiece clamping devices (20) have been provided with raised parts or cavities (15, 25) for the action of the driving element (35).

9. Machining centre according to claim 1, characterized in that the stoppers (10) and the workpiece clamping devices (20) have been fitted with magnetic clamps (18, 28) acting at their lower side facing the fixing plane (2) which forms the work plane (E).

10. Machining centre according to claim 9, characterized in that the magnetic clamps (18, 28) represent some permanent magnets.

11. Machining centre according to claim 1, characterized in that the lower side of the stoppers (10) facing the fixing plane (2), which forms the work plane (E), has been provided with vacuum suction heads (17, 19).

12. Machining centre according to claim 1, characterized in that the workpiece clamping devices (20) have been fitted with vacuum suction heads (27, 29) both on their lower side (22) facing the fixing plane (2), which forms the work plane (E), and on their upper side.

13. Machining centre according to claim 1, characterized in that the lower side (22) of the tool clamping devices (20), opposite the fixing plane (2) forming the work plane (E), has been fitted with vacuum suction heads (27, 29) and their upper side with permanent magnets or electro-magnetic clamps.

14. Machining centre according to claim 1, characterized in that the lower side (22) of the tool clamping devices (20) facing the fixing plane (2), which represents the work plane (E), has been equipped with vacuum suction heads (27, 29) and their upper side with mechanic clamping devices.

## Revendications

1. Centre d'usinage pour pièces d'oeuvre en plaques pleines qui pourront se fixer par serrage à un niveau d'opération (E) et s'usiner par enlèvement des copeaux selon un déroulement présélectionné du programme de commande comportant
A.0 Outils de perçage et de fraisage,
A.1 qui sont déplaçables au niveau parallèle des pièces de oeuvre (3) sous forme de plaque, en axe 'x' et en axe 'y', dans des courbes de chemin qui pourront se commander par le programme CNC,
A.2 qui ont été disposés à des chariots porte-outil (6) ou à des bras porte-outil (9) mobiles et déplaçables moyennant des mécanismes d'entraînement de positionnement, dans le domaine du niveau d'opération (E), en axes 'x' et 'y', et
A.3 qui pourront être mis, en direction de l'axe 'z', à la position de travail sur la pièce d'oeuvre par une course de descente à commande ou manoeuvre mécanique.
B.0 Eléments de butée et de fixation pour les pièces de oeuvre au niveau d'opération, comportant
B.1 des blocs de butée (10) déplaçables, au choix, au niveau d'opération (E), en axes 'x' et 'y', ainsi que fixables aux positions de fonction par des éléments d'adhérence ou de fixation, et
B.2 des dispositifs de serrage à pièce d'oeuvre (20) déplaçables, au choix, au niveau d'opération (E), en axes 'x' et 'y', et fixables aux positions de fonction par des éléments d'adhérence ou de fixation,
caractérisé par ce
C.0 qu'au moins un seul dispositif de positionnement a été prévu, déplaçable au choix au niveau d'opération et muni d'un seul organe d'entraînement (35, 36) au minimum, organe (35, 36) étant monté au chariot porte-outil ou au bras porte-outil (6, 9),
C.1 que les blocs de butée (10) et les dispositifs de fixation à pièce d'oeuvre (20) ont été conçus pour l'engagement positif de l'organe d'entraînement (35, 36), et ici
C.2 les blocs de butée (10) et les dispositifs de fixation à pièce d'oeuvre (20) sont déplaçables, à l'aide d'un programme de commande supplémentaire, de leurs positions d'attente ou positions tenues jusqu'ici, à leurs nouvelles positions de fonction présélectionnées selon le programme de commande supplémentaire en affectant les mécanismes d'entraînement de positionnement du chariot porte-outil ou du bras porte-outil (6, 9).

2. Centre d'usinage selon revendication 1, caractérisé par le transfert des instructions de commande supplémentaires à partir du programme de commande contenant en tant qu'instructions de commande aussi bien les opérations de chariot porte-outil et de bras porte-outil pour les contours extérieurs et intérieurs que les autres opérations de perçage et de fraisage dans le programme de commande supplémentaire pour le positionnement des blocs de butée et des dispositifs de fixation à pièce d'oeuvre, et grâce à ce positionnement, il est possible de programmer des zones de sécurité présélectionnées à partir des courbes de chemin à suivre par les outils d'usinage pour le perçage, le fraisage et les opérations pareilles, et endedans de ces zones, il est impossible de positionner les blocs de butée (10) et les dispositifs de fixation à pièce d'oeuvre (20) à déplacer à de nouvelles positions de fonction.

3. Centre d'usinage selon revendication 1, caractérisé par ce que l'organe d' entraînement (35) pourra se mettre d'une position de repos à une position de travail permettant l'engagement positif dans un bloc de butée (10) ou un dispositif de fixation à pièce d'oeuvre (20).

4. Centre d'usinage selon revendication 1, caractérisé par ce que la fonction du dispositif de positionnement est assumée par un chariot porte-outil (6) ou par un bras porte-outil (9).

5. Centre d'usinage selon revendication 1, caractérisé par ce que l'organe d'entraînement (35) a été monté à un changeur d'outils (30, 31, 33) du chariot porte-outil (6) ou du bras porte-outil (9).

6. Centre d'usinage selon revendication 5, caractérisé par ce que le changeur d'outils (30) a été réalisé comme tourelle revolver (33).

7. Centre d'usinage selon revendication 3, caractérisé par ce que l'organe d'entraînement (35) présente, au moins, un seul goujon ou une seule cheville (36).

8. Centre d'usinage selon revendication 1, caractérisé par ce que les blocs de butée (10) et les dispositifs de fixation à pièce d'oeuvre (20) ont été dotés des bosses ou des creux (15, 25) permettant l'engagement de l'organe d'entraînement (35).

9. Centre d'usinage selon revendication 1, caractérisé par ce que les blocs de butée (10) et les dispositifs de fixation à pièce d'oeuvre (20) ont été munis des aimants adhérents (18, 28) agissant à leur côté inférieur en face du niveau de fixation (2) qui forme le niveau d'opération (E).

10. Centre d'usinage selon revendication 9, caractérisé par ce que les aimants adhérents (18, 28) représentent des aimants permanents.

11. Centre d'usinage selon revendication 1, caractérisé par ce que les blocs de butée (10) ont été dotés des têtes aspirantes (17, 19), soit à leur face inférieure opposée au niveau de fixation (2) formant le niveau d'opération (E).

12. Centre d'usinage selon revendication 1, caractérisé par ce que la face inférieure (22) des dispositifs de fixation à pièce d'oeuvre (20), opposée au niveau de fixation (2) formant le niveau d'opération (E), et leur face supérieure ont été dotées des têtes aspirantes (27, 29).

13. Centre d'usinage selon revendication 1, caractérisé par ce que la face inférieure (22) des dispositifs de fixation à pièce d'oeuvre (20), opposée au niveau de fixation (2) formant le niveau d'opération (E), a été dotée de têtes aspirantes (27, 29) et leur face supérieure d'aimants permanents ou d'électro-aimants adhérents.

14. Centre d'usinage selon revendication 1, caractérisé par ce que la face inférieure (22) des dispositifs de fixation à pièce d'oeuvre (20) se trouvant opposée au niveau de fixation (2) formant le niveau d'opération (E), a été équipée de têtes aspirantes (27, 29) et leur face supérieure de dispositifs de fixation par serrage mécaniques.
